(19) Europäisches Patentamt
European Patent Office
Office européen des brevets

(11) **EP 3 320 736 B1**

(12) **EUROPEAN PATENT SPECIFICATION**

(45) Date of publication and mention
of the grant of the patent:
**14.07.2021 Bulletin 2021/28**

(51) Int Cl.:
***H04W 72/04*** (2009.01)     *H04W 72/08* (2009.01)

(21) Application number: **15748057.5**

(22) Date of filing: **12.08.2015**

(86) International application number:
**PCT/EP2015/068516**

(87) International publication number:
**WO 2017/025139 (16.02.2017 Gazette 2017/07)**

(54) **APPARATUS AND METHOD FOR FULL-DUPLEX COMMUNICATION**

VORRICHTUNG UND VERFAHREN FÜR VOLLDUPLEXKOMMUNIKATION

APPAREIL ET PROCÉDÉ DESTINÉE À UNE COMMUNICATION DUPLEX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.05.2018 Bulletin 2018/20**

(73) Proprietor: **Huawei Technologies Co., Ltd.
Longgang District
Shenzhen, Guangdong 518129 (CN)**

(72) Inventors:
• **DUARTE GELVEZ, Melissa
80992 Munich (DE)**

• **FEKI, Afef
80992 Munich (DE)**
• **VALENTIN, Stefan
80992 Munich (DE)**

(74) Representative: **Pfenning, Meinig & Partner mbB
Patent- und Rechtsanwälte
Theresienhöhe 11a
80339 München (DE)**

(56) References cited:
**WO-A1-2012/008957     WO-A1-2012/112112
US-A1- 2010 112 998     US-A1- 2011 003 606**

• **None**

**Description**

TECHNICAL FIELD

The present invention generally relates to the field of wireless communication, and specifically relates to a wireless communication comprising a full-duplex mode.

BACKGROUND

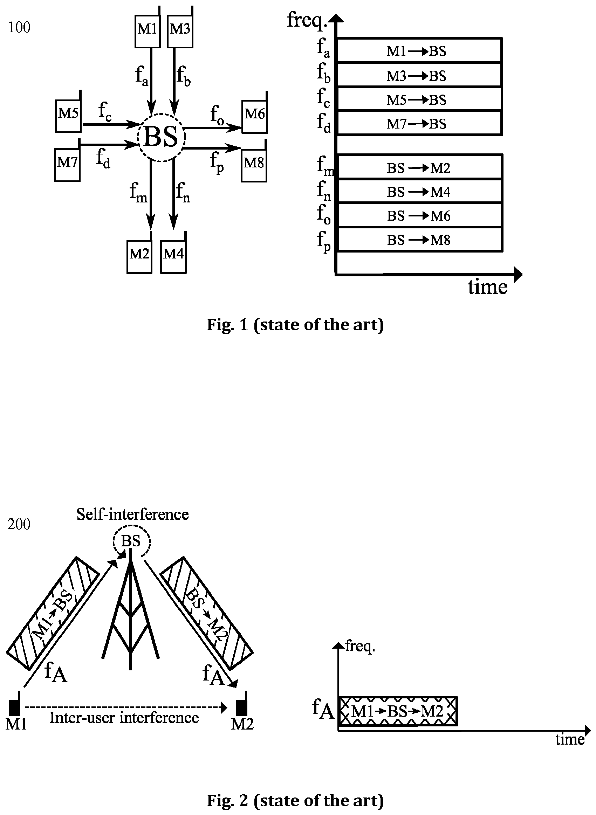

In the field of wireless communication, it is known to use half-duplex systems for transmitting data between a base station and several nodes. Fig. 1 shows such a half-duplex system 100 according to the state of the art. The system comprises a base station BS as well as several nodes or mobile terminals M1, M2, M3, M4, M5, M6, M7, M8. The half-duplex mode of the system 100 is based on frequency division duplex, in which all terminal frequency resources are assigned to the nodes. Correspondingly, each transmission from a node to the base station or from the base station to a node is carried out using a different frequency band $f_a$, $f_b$, $f_c$, $f_d$, $f_m$, $f_n$, $f_o$, $f_p$. Alternative half-duplex systems may use a time division duplex mode instead of the frequency division duplex mode shown in fig. 1. In such a half-duplex time division duplex mode, time resources can be assigned to uplink transmission from a node to the base station or a downlink transmission from the base station to another node, where uplink transmissions occur in time slots that are different from the time slots assigned for downlink.

An in-band full-duplex base station, also known as full-duplex base station, can improve the spectral efficiency of a wireless communication system with regard to the half-duplex mode shown in fig. 1. This improvement is rendered possible by the use of the same time and frequency resources for an uplink and a corresponding downlink. Fig. 2 shows a system 200 based on such a full-duplex mode. Correspondingly, an uplink from a node M1 to a base station BS uses the same frequency band $f_A$ as a downlink from the base station BS to another node M2. However, the full-duplex mode using the same time and the same frequency band for an uplink and a downlink gives rise to self-interference as well as inter-user interference. On the one hand, the self-interference is the interference that is generated by the base station transmission and affects the reception at the base station. On the other hand, the simultaneous uplink and downlink carried out at the same time and over the same frequency band results in inter-user interference that affects the reception at the downlink node M2 and is due to the transmission of the uplink node M1.

Prior art WO 2012/112112 A1 discloses a method in a second network node (eNodeB,BTS) for transmitting signals to and receiving signals from a user equipment in a cellular radio system. The second network node (2nd eNodeB, BTS) signals (sends, transmits) an indicator to a first network node, i.e. RNC or first EnodeB or BTS in the cellular radio system, which indicator indicates an impact of an intermodulation (passive intermodulation, PIM, product) caused by a transmission from a transmitter in the second network node (second eNodeB or BTS) on a receiver in the second network node (second EnodeB or BTS).

Prior art US2010/112998 A1 discloses a method for self-configuration of offset factors between two base stations in a wireless communications system is described. A first offset factor is sent to a first user equipment (UE) by a first base station. An offset factor is an indication of the reselection area around a home evolved nodeB (HeNB). A second offset factor is received from a second UE. The first offset factor is modified using the second offset factor. The modified first offset factor is sent to the first UE.

Prior art WO 2012/008957 A1 discloses a UE comprising a processor configured to perform cell selection based on range expansion according to a cell selection criteria that considers both a control channel quality and a data channel quality and further according to a cell ranking criterion. A fall back cell selection may be provided if a coverage hole is detected.

Prior art US 2011/003606 A1 discloses a system and method are described for adjusting communication with a first distributed-input-distributed-output (DIDO) client as the first DIDO client moves from a first DIDO cluster to a second DIDO cluster: different signal strength thresholds are specified and either conventional DIDO precoding and/or DIDO precoding with inter-DIDO-cluster interference (IDCI) cancellation to avoid RF interference at the DIDO client are employed based on measured signal strengths from a main DIDO cluster and an interfering DIDO cluster.

It is known to reduce the inter-user interference by increasing the distance between nodes that use the same frequency. In the system of fig. 2, this would result in increasing the distance between the uplink node M1 and the downlink node M2. This solution is however not satisfying because nodes located in the surrounding of the base station may not be selected for the full-duplex mode, said full-duplex mode being then restricted to nodes located at the edge of the cell served by the base station. Moreover, the base station may be required to transmit at a larger power if the increased distance between interfering users results in an increased distance between the base station and the downlink users that are served in full-duplex mode. Such an increase in base station transmit power may however be disadvantageous because it may increase the overall interference level. Also, the distance between the base station and the uplink users may also increase, such that the signal received at the base station from an uplink node may become weaker, which in turn results in a worse signal-to-self-interference ratio for the reception at the base station.

## SUMMARY

Having recognized the above-mentioned disadvantages and problems, the present invention aims to improve the state of the art. In particular, the object of the present invention is to provide an improved full-duplex mode.

The present invention particularly intends to improve the full-duplex mode with respect to the inter-user interference. The invention intends to mitigate the inter-user interference in order to increase the spectral efficiency gain of the full-duplex mode.

The above-mentioned object of the present invention is achieved by the solution provided in the enclosed independent claims. Advantageous implementations of the present invention are further defined in the respective dependent claims.

According to a first aspect of the present invention, there is provided a base station for serving a cell and wirelessly communicating with nodes of the cell. The cell comprises a plurality of regions. The base station is adapted to obtain a mitigation factor, $\alpha$, which indicates a level of signal attenuation, $\mu$, between the regions. The base station is adapted to select nodes to be served in full-duplex mode depending on the mitigation factor. The base station is adapted to serve the selected nodes in full-duplex mode, wherein the full-duplex mode uses the same time and frequency resources for an uplink from a node (MI) and downlink from another node (M2). Thereby, full-duplex communication can be supported while at the same time reducing the inter-user interference. With other words, the base station is adapted to select nodes to be served in full-duplex mode, by considering a certain level of signal attenuation indicated by the mitigation factor between the regions the nodes are selected from.

In a first possible implementation form of the base station according to the first aspect, each pair of regions consisting of a first region and a second region of the plurality of regions is associated with the mitigation factor indicating the level of signal attenuation between the first region and the second region. The base station is adapted to select nodes to be served in full-duplex mode by selecting one pair of regions depending on the associated mitigation factor and selecting a first node from the first region of the selected pair and a second node from the second region of the selected pair. Thereby, full-duplex communication between the first and second regions can be supported while at the same time reducing the inter-user interference between the first and second regions.

In a second possible implementation form of the base station according to the first implementation form of the first aspect, the base station is adapted to select one pair of regions if the associated mitigation factor is above a first threshold. Thereby, it can be ensured that the inter-user interference between a node in the first region and another in the second region is below a given threshold.

In a third possible implementation form of the base station according to the second implementation form of the first aspect, the first threshold depends on the traffic demand at the base station, and/or depends on interference requirements of nodes within the selected pair. Thereby, if the traffic demand at the base station increases, the first threshold can be decreased for serving more nodes in full-duplex mode. Also, if interference requirements of nodes within the selected pair increase, the first threshold can be increased for reducing the inter-user interference levels within the selected pair of regions.

In a fourth possible implementation form of the base station according to the second or the third implementation form of the first aspect, the base station is adapted to decrease the first threshold if the traffic demand at the base station increases, or if the interference requirements decrease, and vice versa. Thereby, the first threshold can be adaptively set to a given traffic demand.

In a fifth possible implementation form of the base station according to any of the first to fourth implementation form of the first aspect, the base station is adapted to select a first node from the first region of the selected pair depending on the interference requirements of the first node, and/or to select a second node from the second region of the selected pair depending on the interference requirements of the second node. Thereby, if two nodes of a region have different interference requirements, the node having the lowest interference requirements can be served in full-duplex mode for improving the spectral efficiency, and the node having the highest interference requirements can be served in half-duplex mode for guaranteeing its high interference requirements.

In a sixth possible implementation form of the base station according to the first aspect or according to any of the first to fifth implementation form of the first aspect, the base station is adapted to serve the selected nodes in full-duplex mode by receiving data from the first node and transmitting data to the second node simultaneously in the same frequency channel. Thereby, the same frequency resources can be used for an uplink from the first node to the base station and for a downlink from the base station to the second node.

In a seventh possible implementation form of the base station according to the first aspect or according to any of the first to sixth implementation form of the first aspect, the base station is adapted to identify that a node of the cell is or is not located in one of the plurality of regions. Thereby, the base station is able to select these nodes for the full-duplex mode.

In an eighth possible implementation form of the base station according to the seventh implementation form of the first aspect, the base station is adapted to identify that a node is or is not located in one of the plurality of regions in that the base station is adapted to retrieve location information of the node and compare it to location information of the regions. Thereby, the base station is able to select these nodes for the full-duplex mode.

In a ninth possible further implementation form of the base station according to the seventh implementation form of the first aspect, the base station is adapted to identify that a node is or is not located in one of the plurality of regions in that the base station is adapted to transmit location information of the regions to the node and to receive a notification from the node indicating that the node is inside or outside, or enters or leaves said one of the plurality of regions. Thereby, the base station is able to serve a node in full-duplex mode if the node is inside one of the plurality of regions, or enters said one of the plurality of regions. Further, the base station is able to stop the full-duplex mode for a node that is outside said one of the plurality of regions, or that leaves said one of the plurality of regions.

According to a second aspect of the present invention, there is provided a method for a wireless communication between a base station and nodes of a cell. The cell comprises a plurality of regions. The method comprises the steps of: obtaining by the base station a mitigation factor, $\alpha$, indicating a level of signal attenuation, $\mu$, between the regions, selecting by the base station nodes to be served in full-duplex mode depending on the mitigation factor, $\alpha$, and serving by the base station the selected nodes in full-duplex mode, wherein the full-duplex mode uses the same time and frequency resources for an uplink from a node (M1) and downlink from another node (M2).

Further features or implementations of the method according to the second aspect of the invention can perform the functionality of the base station according to the first aspect of the invention and its different implementation forms.

According to a third aspect of the present invention, there is provided a method for computing a mitigation factor, $\alpha$, between a plurality of regions of a cell being served by a base station, the method comprising the steps of: defining a first region, R1A, and a second region, R2A, of the plurality of regions, by identifying at least one obstruction in a geographical area based on a map, said obstruction being an obstacle that attenuates a wireless signal, wherein the first region, R1A, and the second region, R2A, are defined as being two areas around the obstruction, computing a signal attenuation, $\mu$, from different points, p1,1,..., p1,20, of the first region, R1A, to different points, p2,1,... p2,20, of the second region, R2A, and computing the mitigation factor, $\alpha$, based on the signal attenuation, $\mu$.

Thereby, full-duplex communication between the first and second regions can be supported while at the same time reducing the inter-user interference between the first and second regions.

In a first possible implementation form of the method according to the third aspect, the step of defining a first region and a second region comprises, if the signal attenuation, $\mu$, from a first point p 1,1 of the first region,

R1A, to a second point p2,1 of the second region, R2A, is below a second threshold, $\mu^*$, refining the first region, R1A, and the second region, R2A, by respectively removing therefrom the first point p1,1 and the second point p2,1.

By refining the regions, that is, reducing the size or extension of the regions, depending on the level of signal attenuation between, a desired level of inter-user interference between users in the two refined regions is achieved. With other words, by refining the regions, a mechanism is provided for controlling the inter-user interference.

Particularly, the first threshold and the second threshold may be identical, or can be chosen in relation to each other. Thereby, the shape of the regions can be refined so as to ensure a desired level of inter-user interference between users/nodes from the first and second regions.

In a second possible implementation form of the method according to the third aspect or according to the first implementation form of the third aspect, the method further comprises computing different signal attenuations, $\mu$, from different points, p1,1, ..., p1,20, of the first region, R1A, to different points, p2,1, ... p2,20, of the second region, R2A, and defining the mitigation factor, $\alpha$, as being a function of the signal attenuations, $\mu$, such as the minimum value of the different signal attenuations $\mu$, or the average value of the different signal attenuations $\mu$.

Thus, the mitigation factor associated with the first and second regions can be used as a value reflecting the inter-user interference mitigation between users from the two regions.

In a further implementation form of the base station according to the first aspect or according to one implementation form of the first aspect, the base station comprises further a processor adapted to obtain the mitigation factor, $\alpha$, using the method of the third aspect or of one of the implementation form of the third aspect.

Particularly, the base station can be adapted to identify an obstruction based on a radio map, wherein each location of the radio map is associated with a signal attenuation between said location and a best serving base station for said location, wherein preferably a location of the radio map associated with a signal attenuation above a given threshold is identified as obstruction. Thereby, the identification of the obstructions can be simplified.

Particularly, each location of the radio map can be associated with the signal attenuation between said location and the best serving base station for said location, as well as with a signal phase between said location and the best serving base station for said location or a function of the signal phase. Thereby, the obstructions can be even better identified.

Particularly, the base station can be adapted to refine the boundary of the obstruction by means of street map information. Thereby, the boundary of the obstruction can be refined e.g. by means of road boundaries of a street map.

Particularly, the base station can be adapted to identify an obstruction based on a street map or a floor map. Thereby, the identification of the obstructions can be simplified.

According to a fourth aspect of the present invention, there is provided a device adapted to implement the method of the third aspect or of one of the implementation form of the third aspect. Such a device can be part of the radio access network (RAN). The device can also be realized as the RAN controller. The device can also be implemented at a network controller in another network or a core network. The device can be located in the base station, or in a radio access network comprising the base station, or in a core network connected to the radio access network. Thereby, the computation of the mitigation factor and of the associated regions can be carried out by a desired device depending on e.g. the resources required for this computation.

According to a fifth aspect of the present invention, there is provided a wireless system comprising a base station according to the first aspect of the present invention, a device according to the third aspect of the present invention, and at least one node.

According to a sixth aspect of the present invention, there is provided a node for wirelessly communicating with a base station serving a cell. The cell comprises a plurality of regions. The node is adapted to receive location information of the regions and to transmit a notification comprising information about the location of the node with respect to at least one of the regions. Thereby, the node can be selected by the base station to be served in full-duplex mode.

In a first possible implementation form of the node according to the sixth aspect, the node is adapted to identify whether it is inside or outside of said at least one of the regions, or whether it enters or leaves said at least one of the regions based on the received location information of the regions. The notification indicates that the node is inside or outside, or enters or leaves said at least one of the regions. Thereby, the base station can serve the node in full-duplex mode depending on the notification.

In a second possible implementation form of the node according to the sixth aspect, the node is adapted to receive the location information from the base station and to transmit the notification to the base station. Thereby, the base station can serve the node in full-duplex mode depending on the notification.

According to a seventh aspect of the present invention, there is provided a method for a wireless communication between a node and a base station of a cell. The cell comprises a plurality of regions. The node receives location information of the regions.

The node transmits a notification indicating the location of the node with respect to at least one of the regions.

Further features or implementations of the method according to the seventh aspect of the invention can perform the functionality of the node according to the sixth aspect of the invention and its different implementation forms.

An eighth aspect of the present invention provides a computer program having a program code for performing a method according to the second, fourth or sixth aspect of the present invention when the computer program runs on a computing device.

The invention proposes a method for reducing inter-user interference in full-duplex communication based particularly on geographical context information. The invention exploits the geographical context, for example the location of nodes, reflectors and scatterers, in order to mitigate the inter-user interference for supporting full-duplex communication. A mitigation factor that may indicate the minimum level of signal attenuation between different geographical regions is computed. The mitigation factor, the regions associated to the mitigation factor, as well as the knowledge of the location of the user are then used to select nodes for a full-duplex wireless communication. Selecting nodes for the full-duplex mode consists in selecting an uplink transmitter node and a downlink receiver node that may share the same time and frequency resources. The inter-user interference is advantageously reduced. The selected nodes may communicate with the base station without experiencing inter-user interference or with levels of inter-user interference that are below a given threshold.

By selecting full-duplex nodes depending on the mitigation factor that indicates the level of signal attenuation between different regions, the present invention provides an advantageous technique for keeping track of weak interferers, this approach is different from known techniques for reducing interference levels based principally on keeping track of strong interferers. The proposed technique allows for reducing the level of inter-user interference with respect to known techniques for interference mitigation.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by external entities not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above aspects and implementation forms of the present invention will be explained in the following description of specific embodiments in relation to the enclosed drawings, in which:

Fig. 1 shows a half-duplex system according to the state of the art;

Fig. 2 shows a full-duplex system according to the state of the art;

Fig. 3 shows a full-duplex system according to an embodiment of the present invention;

Fig. 4 shows a full-duplex system according to a further embodiment of the present invention;

Fig. 5 shows a method for a wireless communication according to an embodiment of the present invention;

Fig. 6 shows a method for defining a mitigation factor according to a further embodiment of the present invention;

Fig. 7 shows a method for a wireless communication according to a further embodiment of the present invention;

Fig. 8 shows an embodiment of the present invention for mitigating the inter-user interference in the full-duplex mode;

Fig. 9 shows an embodiment of the present invention for mitigating the inter-user interference in the full-duplex mode;

Fig. 10 shows an embodiment of the present invention for mitigating the inter-user interference in the full-duplex mode;

Fig. 11 shows an embodiment of the present invention for defining a mitigation factor between regions and for selecting nodes to be served in full-duplex mode;

Fig. 12 shows a radio map according to an embodiment of the present invention;

Fig. 13 shows an embodiment of the present invention for identifying obstructions;

Fig. 14 shows an embodiment of the present invention for identifying preliminary regions;

Fig. 15 shows an embodiment of the present invention for defining points in the preliminary regions;

Fig. 16 shows an embodiment of the present invention for defining a virtual trajectory between preliminary regions;

Fig. 17 shows an embodiment of path loss values for a virtual trajectory according to the present invention;

Fig. 18 shows an embodiment of path loss gradients for a virtual trajectory according to the present invention;

Fig. 19 shows an embodiment of a list of points of the preliminary regions and corresponding signal attenuation according to the present invention;

Fig. 20 shows an embodiment of a list of points of the final regions and of a mitigation factor according to the present invention;

Fig. 21 shows an embodiment of the present invention for obtaining a geographical description of the final regions;

Fig. 22 shows a further embodiment of the present invention for obtaining a geographical description of the final regions;

Fig. 23 shows an embodiment of the present invention for storing the final regions and their corresponding mitigation factor, and

Fig. 24 shows a further embodiment of the present invention for storing the final regions and their corresponding mitigation factor.

DETAILED DESCRIPTION OF EMBODIMENTS

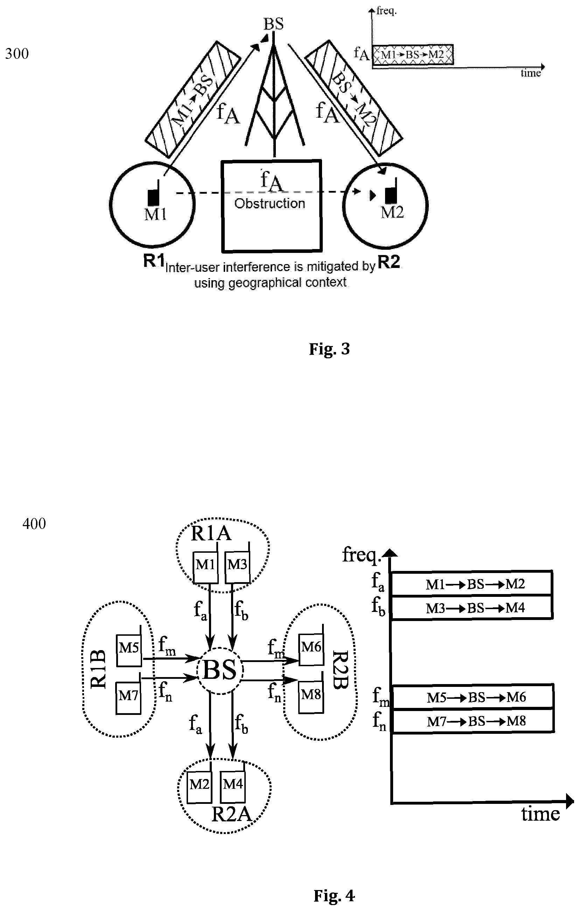

Fig. 3 shows an embodiment of a full-duplex system 300 according to the present invention.
The system comprises a base station BS for serving a cell and wirelessly communicating with nodes M1, M2 of the cell. The cell comprises a plurality of regions R1, R2. The base station is adapted to select nodes M1, M2 to be served in full-duplex mode depending on a mitigation factor $\alpha$ indicating a level of signal attenuation $\mu$ between the regions R1, R2. The base station BS is further on adapted to serve the selected nodes M1, M2 in full-duplex mode.
Fig. 4 shows a further embodiment of a full-duplex system 400 according to the present invention.
The system comprises a base station BS for serving a cell and wirelessly communicating with nodes M1, M2, M3, M4, M5, M6, M7, M8 of the cell. The cell comprises a plurality of regions, wherein each pair of regions R1A, R2A, R1B, R2B consisting of a first region R1A, RIB and a second region R2A, R2B of the plurality of regions is associated with a mitigation factor α indicating a level of signal attenuation μ between the first region R1A and the second region R2A. The base station is adapted to select one pair of regions R1A, R2A depending on the associated mitigation factor α, and to select a first node M1 from the first region R1A of the selected pair and a second node M2 from the second region R2A of the selected pair. The base station BS is further on adapted to serve the selected first node M1 and second node M2 in full-duplex mode.

The base station BS generally covers an area that delimits the cell. The base station is adapted to communicate wirelessly and directly with the nodes present in the cell. The base station may be adapted to communicate with the nodes according to a cellular network standard like for example GSM, UMTS or LTE Advanced. In this case, the base station is preferably connected to a mobile phone network and communicates directly with the nodes. Depending on the cellular network standard used, the base station may have specific terms like Node B or eNodeB. Depending on the size of the served cell, the base station may be a small cell, micro cell, or femto cell. Alternatively, the base station may be part of a computer network and may be a wireless access point that allows wireless devices to connect to a network.

The node according to the present invention that communicates with the base station BS may be a user equipment or mobile device like for example a handheld telephone or any other device used directly by an end-user to communicate. Alternatively, such a node may be another base station, i.e. a base station serving another cell. The other base station may be for example any of a small cell, a micro cell, a femto cell, or an access point.

The full-duplex system 300, 400 according to the embodiment of Fig. 3 or Fig. 4 may comprise a device adapted to define the mitigation factor indicating the level of signal attenuation between the regions R1, R2 of the cell being served by the base station. The device may particularly be located in the base station BS. Alternatively, the device may be located in a radio access network comprising the base station BS, or in a core network connected to the radio access network comprising the base station BS.

Particularly according to the embodiment of Fig. 4, the system comprises a device adapted to associate at least one pair of regions R1A, R2A consisting of a first region R1A and a second region R2A of the regions R1, R2 of the cell with a mitigation factor α indicating the level of signal attenuation μ between the first region R1A and the second region R2A.

The full-duplex system 300, 400 according to the embodiment of Fig. 3 or Fig. 4 comprises at least one node M1, M2, M3, M4, M5, M6, M7, M8 for wirelessly communicating with the base station BS serving a cell. The cell comprises a plurality of regions R1, R2, R1A, R2A, RIB, R2B. The node is adapted to receive location information of the regions and to transmit to the base station BS a notification comprising information about the location of the node with respect to at least one of the regions.

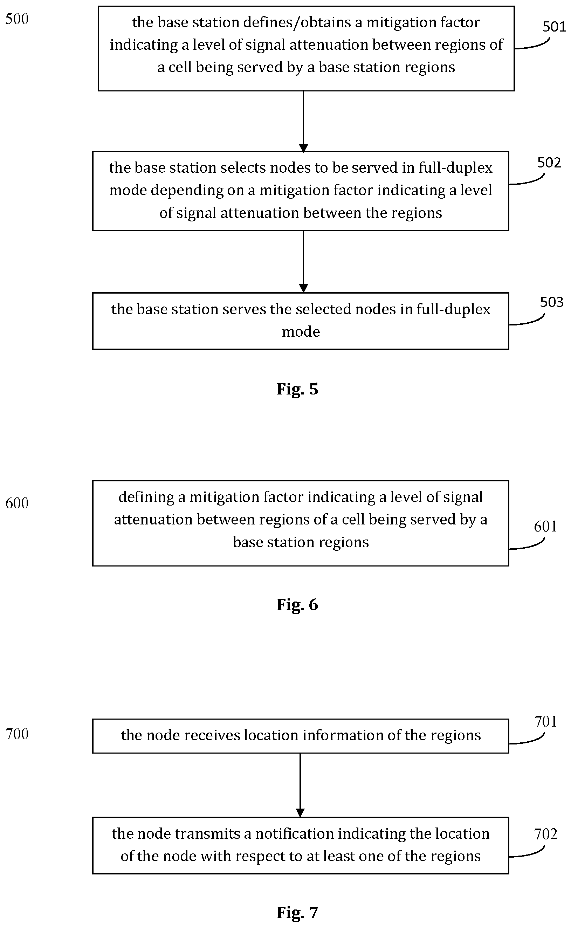

Fig. 5 shows a method 500 for a wireless communication between the base station BS and the nodes M1, M2 of the cell according to an embodiment of the present invention. The cell comprises a plurality of regions R1, R2.

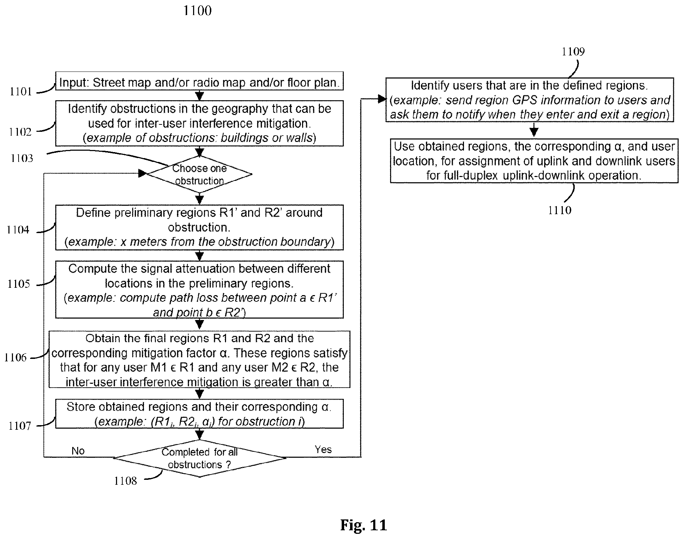

According to the method 500, the base station obtains a mitigation factor α indicating a level of signal attenuation μ between the regions R1, R2. The mitigation factor can be either obtained at the base station from the device described above, or can be computed by the base station, for example, according to steps 1101 to 1108 of Fig. 11. Based on the obtained mitigation factor, the base station BS selects in step 502 nodes M1, M2 to be served in full-duplex mode.

According to the method 500, the base station BS serves 503 the selected nodes M1, M2 in full-duplex mode.

Fig. 6 shows a method 600 according to a further embodiment of the present invention.

The method 600 comprises defining 601 a mitigation factor α indicating a level of signal attenuation μ between regions R1, R2 of a cell being served by a base station.

Fig. 7 shows a method 700 for a wireless communication between a node M1, M2 and a base station BS of a cell according to an embodiment of the present invention. The cell comprises a plurality of regions R1, R2.

According to the method 700, the node M1, M2 receives 701 location information of the regions R1, R2.

According to the method 700, the node M1, M2 then transmits 702 a notification indicating the location of the node M1, M2 with respect to at least one of the regions R1, R2.

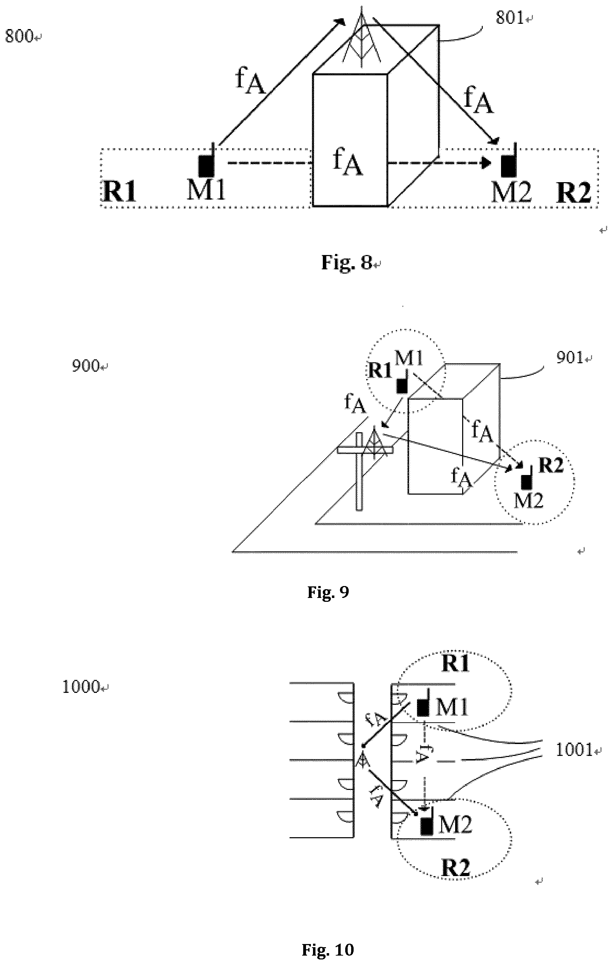

Figs. 8, 9 and 10 show different embodiments for mitigating the inter-user interference in the full-duplex mode in accordance with the present invention.

Particularly, the inter-user interference may be mitigated by means of geographical context information. The geographical context information that may be exploited to mitigate the inter-user interference in full-duplex mode may comprise geographical properties that constrain the mobility of a node, i.e. of the user. Such geographical properties may comprise the position of streets or the position of buildings. Further on, the geographical context information may comprise geographical properties that constrain the signal propagation within the wireless communication. Such geographical properties may comprise the position of buildings that may for example attenuate the signal strength or that may act as reflectors or scatterers. Within buildings, the geographical properties that may constrain signal propagation also comprise the position of walls within the building. Further on, the geographical context information may also comprise the geographical position of the users, i.e. of the nodes, as well as the geographical position of the base stations.

Fig. 8 shows a system 800 comprising an obstacle 801 in the form of a building. The obstacle 801 may be used to define two different regions R1, R2 located on two opposite sides of the obstacle 801. A first node M1 located in the first region R1 transmits data over a frequency band $f_A$ and correspondingly acts as an uplink node. A second node M2 is located in the second region R2 and receives data from a base station over the same frequency band $f_A$ and acts as a downlink node. The use of the same frequency band by the two nodes M1, M2 potentially causes inter-user interference because the second node M2 may possibly receive the signal transmitted by the first node M1.

In this respect, an inter-user interference mitigation is achieved in the system 800, because of the signal attenuation implied by the obstacle 801. In the macro cell scenario of Fig. 8, the regions R1, R2, in which full-duplex nodes M1, M2 are selected, are defined according to the geographical context so as to mitigate the inter-user interference. The interference mitigation between the regions R1, R2 is characterized by means of the mitigation factor $\alpha$. The mitigation factor $\alpha$ is an indicator of the level of signal attenuation between the regions R1 and R2. For example, said mitigation factor $\alpha$ may indicate a minimum level or an average level of the signal attenuations between said regions.

Thereby, if the mitigation factor $\alpha$ is defined as indicating the minimum level of signal attenuation between said regions, the relation between the regions R1, R2 on the one hand and the mitigation factor $\alpha$ on the other hand may be defined as follows: for any first node M1 located in the first region R1 and any node M2 located in the second region, the inter-user interference mitigation between the first node M1 and the second node M2 is above $\alpha$ dB. The computation of the mitigation factor $\alpha$ and of the associated regions R1, R2 may be done in several different ways as shown below.

Fig. 9 shows a system 900 comprising an obstacle 901 in the form of a building, as an example of inter-user interference mitigation due to attenuation through building. Comparing to the system 800 of Fig. 8, the system 900 relates to a small cell scenario. Fig. 10 shows a further system 1000 of inter-user interference mitigation due to attenuation via obstacles located within a building, e.g. due to attenuation through walls 1001, and associated regions R1 and R2. The system 1000 relates to a pico cell scenario.

The obstacles 801, 901, 1001 may be used to define two different regions R1, R2 located on two opposite sides of the obstacle. A first node M1 located in the first region R1 transmits data over a frequency band fA and correspondingly acts as an uplink node. A second node M2 is located in the second region R2 and receives data from a base station over the same frequency band fA and acts as a downlink node. The use of the same frequency band by the two nodes M1, M2 potentially causes inter-user interference because the second node M2 may possibly receive the signal transmitted by the first node M1.

For a pair of regions R1, R2, the mitigation factor $\alpha$ between these two regions may e.g. indicate that the attenuation of a signal transmitted from the first region R1 and received at the second region R2 is at least $\alpha$ dB. The regions R1, R2 and the corresponding mitigation factor $\alpha$ are known to the base station. The base station retrieves location information about the nodes, i.e. user position information, to know which nodes are in the identified regions R1, R2. The users in these identified regions are eligible for full-duplex uplink-downlink communication. In other words, the base station has knowledge about the regions R1, R2, about the mitigation factor $\alpha$ associated to the regions R1, R2, and about the nodes belonging to these regions R1, R2. Based on this knowledge, the base station may select the nodes that can be served in the full-duplex uplink-downlink mode.

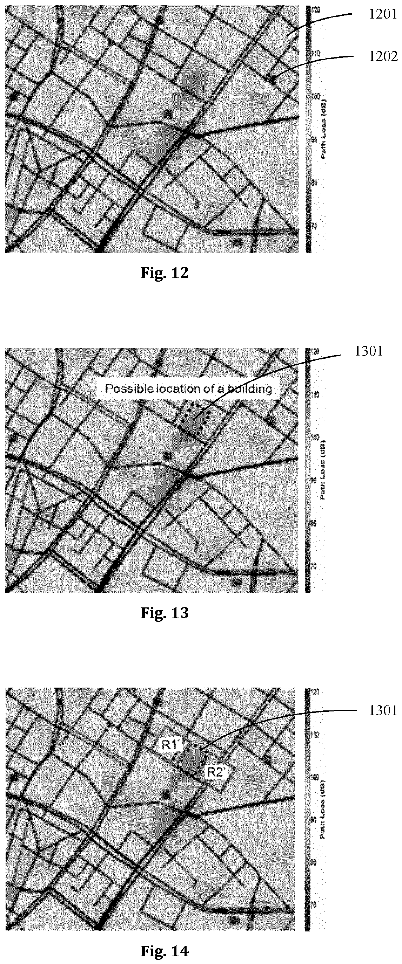

Fig. 11 shows an embodiment according to the present invention for defining a mitigation factor indicating a level of signal attenuation between regions of a cell being served by a base station, and for selecting nodes to be served in full-duplex mode depending on the mitigation factor. The embodiment of Fig. 11 will be explained in the followings using the further embodiments of Figs. 12 to 24.

The method for defining or computing a mitigation factor $\alpha$ between a plurality of regions R1, R2 of a cell being served by a base station comprises the steps of: defining a first region R1A and a second region R2A of the plurality of regions R1, R2, by identifying at least one obstruction in a geographical area based on a map, said obstruction being an obstacle that attenuates a wireless signal, wherein the first region R1A and the second region R2A are defined as being two areas around the obstruction, computing a signal attenuation $\mu$ from different points p1,1, ..., p1,20 of the first region R1A to different points p2,1, ... p2,20 of the second region R2A, and computing the mitigation factor $\alpha$ based on the signal attenuation $\mu$.

The method 1100 shown in Fig. 11 comprises blocks 1101 to 1108 related to steps for the computation of the regions R1, R2 and the corresponding mitigation factor $\alpha$. The regions and the associated mitigation factor depend on geographical properties like buildings, walls or streets that will only change in a large time scale. Consequently, the regions and the mitigation factor associated to these regions do not need to be updated often. The computation and update of the regions and the associated mitigation factor can be performed offline on a processor that is internal or external to the base station.

The method 1100 further comprises blocks 1109, 1110 related to the selection of nodes to be served in full-duplex mode and defining how to use the knowledge of the regions and of the associated mitigation factor in order to identify nodes, i.e. users that are eligible for full-duplex uplink-downlink communication.

The method 1100 according to the embodiment shown in Fig. 11 uses as input 1101 a street map, a radio map and/or a floor plan. The radio map is known in the prior art and can be generated according to the document "MOdels and siMulations for nEtwork plaNning and conTrol of UMts" MOMENTUM, 2004, http://momentum.zib.de.

Fig. 12 shows an embodiment of the radio map as may be used as an input by the method 1100 according to an embodiment of the present invention. The shown radio map 1201 comprises pixels, wherein each pixel represents an area of 40 m * 40 m. Each dark square pixel 1202 represents a base station. The radio map corresponds to the path loss calculated for each pixel from the best serving base station. Obstructions that may constitute obstacles for wireless signals, like buildings, may be identified from image/pixel information and street information. For example, if the path loss associated to a given pixel of the radio map is above a threshold, then the associated pixel may be interpreted as being the location of a building. The presence of the building on the location defined by the pixel can in turn be verified based on the street map information.

The next step of the method 1100 consists in identifying 1102 obstructions that may be used for the inter-user interference mitigation according to the present invention. Such obstructions are obstacles that may attenuate a wireless signal. The obstruction identification may be carried out from radio maps.

Fig. 13 shows the use of the radio map for identifying possible locations of obstructions like buildings. The area 1301 delimited by the dotted line comprises pixels that have an associated path loss that is above said threshold. Further on, one side of the area 1301 may be delimited by the road information taken from the street map. The area 1301 is therefore identified as being a possible location of a building on the basis of the radio map combined with information of the street map.

In addition to or alternatively to the identification of obstructions based on the radio map and/or the street map, it is also proposed to identify obstructions based on a visit of the site. For example, buildings of a given height may be identified as obstructions during the base station deployment or during a drive test.

Once all obstructions have been identified 1102, one of these obstructions is chosen 1103 and processed.

For the chosen obstruction, preliminary regions R1', R2' are defined 1104 around the obstruction. Fig. 14 shows an embodiment of preliminary regions RI', R2' identified on the radio map. The preliminary regions RI', R2' may be specified as being the points in the space that are within x meters away from the boundary of the obstruction 1301 and at opposite sides of the obstruction 1301. Alternatively, the preliminary regions RI', R2' may be specified by the pixels of the radio map that are within y pixels from the obstruction boundary and at opposite sides of the obstruction.

Once the preliminary regions R1', R2' are identified 1104 for a given obstruction 1301, the signal attenuation is computed 1105 between different locations in the preliminary regions RI', R2'.

For computing that signal attenuation, it is first proposed to select points in the preliminary regions R1', R2' that shall be used for the computation of the signal attenuation between the two regions. This selection may be done from the radio map. For example, according to an embodiment it is proposed to select one point per pixel of the radio map, so that the number of selected points in each preliminary region R1', R2' is equal to the number of pixels in the respective region. Alternatively, another possibility is to uniformly select points within the regions.

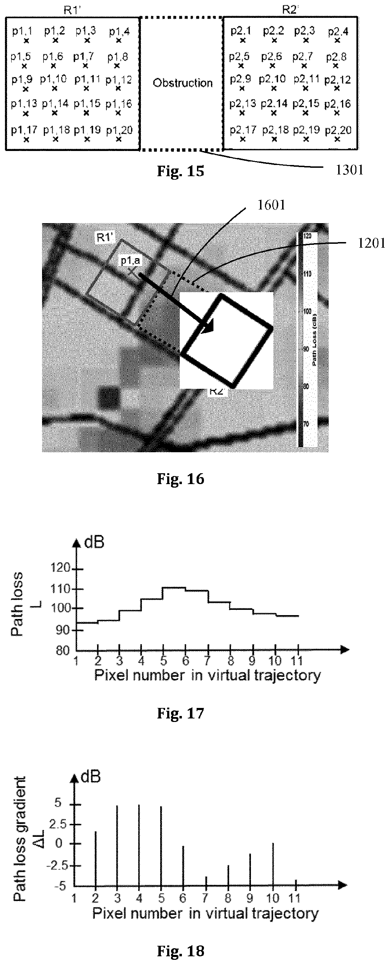

Fig. 15 shows an example of points p1,1 to p1,20 selected in one of the preliminary regions R1' as well as points p2,1 to p2,20 selected in the other preliminary region R2' for the computation of the signal attenuation between both preliminary regions.

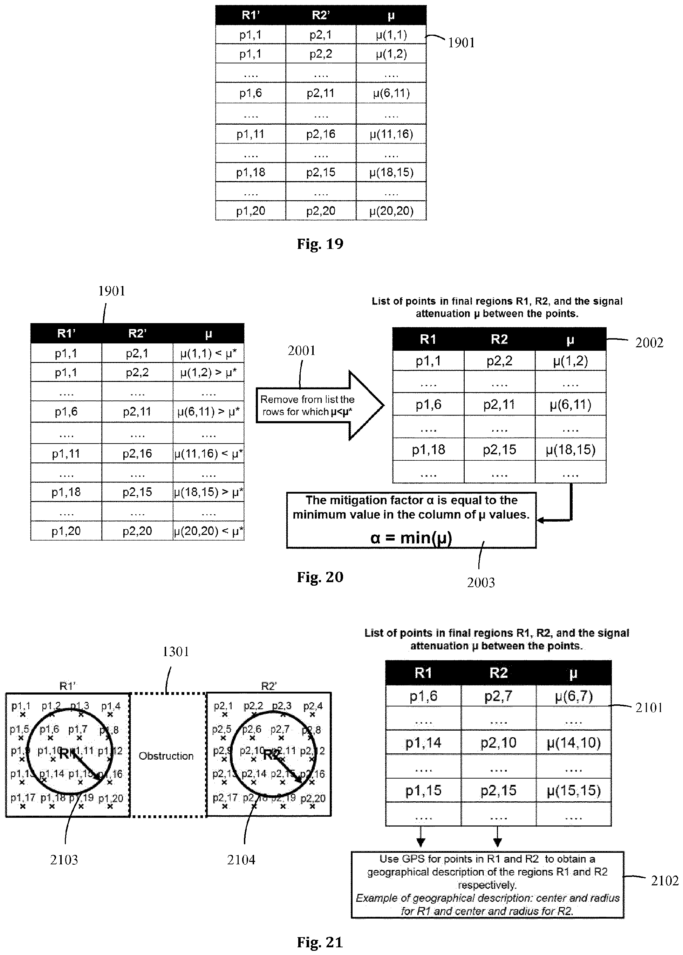

After having defined the points in the preliminary regions R1', R2', the signal attenuation is computed between points in the regions. The value $\mu(a, b)$ is defined as being the signal attenuation between a first point p1,a of the first preliminary region R1' and a further point p2,b located in the other preliminary region R2'. The signal attenuation $\mu(a, b)$ is computed for all points p1,a of the first preliminary region R1' and all points p2,b of the second preliminary region R2'. Alternatively, said signal attenuation $\mu(a, b)$ is only computed for a subset of the points p1, a and p2,b. The number of points in the preliminary regions and the number of signal attenuation values $\mu(a, b)$ computed between points of the preliminary regions define the granularity at which the signal attenuation between the preliminary regions is known. In the example of Fig. 15, 20 points are defined in the first preliminary region R1' and 20 points are defined in the second preliminary region R2'. The maximum number of signal attenuation values $\mu(a, b)$ that may be computed between a first point p1,a of the first preliminary region R1' and a point p2,b of the second preliminary region R2' is then 400. Depending on the desired granularity, it is possible to reduce the number of computed signal attenuation values $\mu(a, b)$ below 400.

The signal attenuation value $\mu(a, b)$ between two points of the two preliminary regions R1', R2' may be computed according to different ways. A first possibility is to compute the signal attenuation value from a path loss model. According to a second possibility, the signal attenuation value may be computed using ray tracing. According to a third possibility, drive tests are performed and measurements are carried out between a transmitter located in the point p1,a of the first preliminary region R1' and a receiver located at the point p2,b of the second preliminary region R2'.

According to a fourth possibility, the signal attenuation values $\mu(a, b)$ may be computed from radio map information as explained in the followings. In a first step, a virtual trajectory between a point p1,a of the first preliminary region and a point p2,b of the second preliminary region is considered. In Fig. 16, such a virtual trajectory 1601 is represented by an arrow. In a second step, it is proposed to enumerate, i.e. to list the pixels that are traversed by the virtual trajectory 1601 from the first point p1,a to the second point p2,b. For example, if the virtual trajectory 1601 traverses N pixels, these N pixels may be enumerated and defined as pixels p1, p2,..., pN.

In a third step, it is proposed to compute the discrete gradient on the set of path loss values on the pixels p1,..., pN identified on the virtual trajectory 1601. Fig. 17 shows the value of the path loss L for each pixel identified on the virtual trajectory 1601. The gradient at a given pixel is computed according to the following equation:

$$\Delta L(pixel) = L(pixel)\text{-}L(pixel\text{-}1).$$

Fig. 18 is a diagram showing the path loss gradient $\Delta L$ for each pixel of the virtual trajectory, i.e. showing the discrete gradient along the virtual trajectory 1601.

In a fourth step, the signal attenuation value $\mu(a, b)$ is computed as being the sum of the absolute value of the discrete gradient along the virtual trajectory 1601, i.e. according to the following equation:

$$\mu(a,b) = \sum_{pixel=1}^{N} |\Delta L(pixel)|.$$

After having computed 1105 the signal attenuation between different locations in the preliminary regions R1', R2', the next step of the method 1100 consists in obtaining 1106 the final regions R1, R2 and the corresponding mitigation factor $\alpha$. In other words, the boundaries of the regions obtained in step 1104 may be refined.

The points p1,a , p2,b selected in the preliminary regions R1', R2' as well as the signal attenuation value $\mu(a, b)$ between said points in the preliminary regions are used to obtain 1106 the final regions R1, R2 and the mitigation factor $\alpha$ between the final regions R1, R2. This step may be carried out according to the following sub-steps.

In a first sub-step, the information regarding the points in the preliminary regions R1', R2' and the signal attenuation $\mu(a, b)$ may be organized in a list. Fig. 19 shows an embodiment of such a list 1901 listing for each computed signal attenuation the corresponding point p1,a of the preliminary region R1' and the point p2,b of the second preliminary region R2'.

In a second sub-step, the points of the final regions R1, R2 are obtained by removing 2001, i.e. filtering out, of the list 1901 the rows for which the signal attenuation is less than a threshold $\mu^*$. The threshold $\mu^*$ is a mitigation threshold that can be set according to the mitigation requirements. For example, if the required interference mitigation is 100 dB or more then it is proposed to set $\mu^* = 100$ dB in an embodiment. The threshold $\mu^*$ can also be set according to the statistics in the preliminary regions. For example, the threshold $\mu^*$ may be set so as to be equal to the average of all signal attenuation $\mu(a, b)$ in the list 1901.

In general, removing 2001 from the list the rows for which $\mu < \mu^*$ results in filtering out outliers. An embodiment of the list 1901 and the list 2002 obtained by filtering out the rows for which $\mu < \mu^*$ is shown in Fig. 20. The list 2002 obtained by the filtering is a list of points in final regions R1, R2 with their corresponding signal attenuation.

In a third sub-step, the mitigation factor $\alpha$ between the final regions R1, R2 is defined as being a function of the signal attenuations $\mu$. In the embodiment of Fig. 20, the mitigation factor $\alpha$ between the final regions R1, R2 is set 2003 to be the minimum value of the different signal attenuations $\mu$ of the obtained list 2002 according to the following equation:

$$\alpha = \min(\mu).$$

Alternatively, the mitigation factor $\alpha$ between the final regions R1, R2 may be defined as being the average value of the different signal attenuations $\mu$ of the obtained list 2002.

In a fourth sub-step, the list of points of the final regions is used to obtain a geographical description of the final regions R1, R2. Fig. 21 shows an embodiment according to which the Global Positioning System (GPS) location information of the points in the final regions R1, R2 may be used to obtain 2102 a geographical description of the final regions R1, R2. The final regions R1, R2 have the shape of a circle, and information regarding the center and radius of the final regions R1, R2 are obtained from the location information of the points in the obtained list 2101.

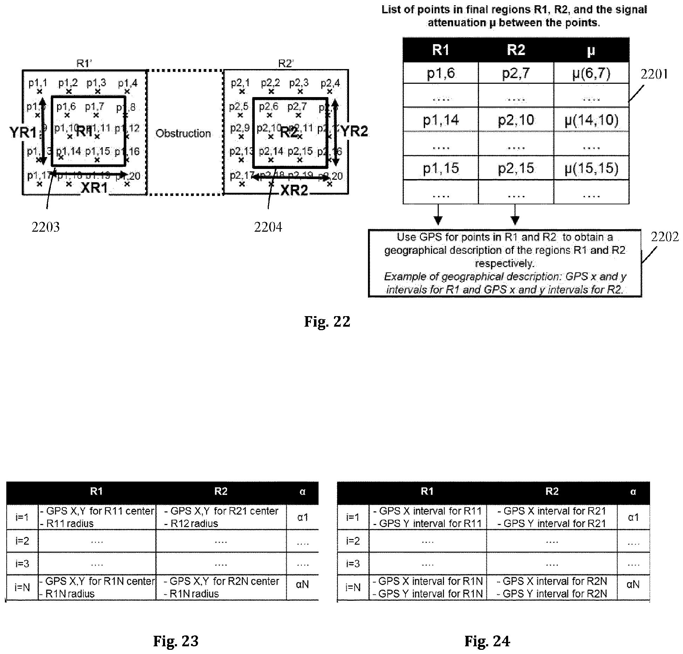

In the embodiment of Fig. 22, the final regions R1, R2 are approximated as rectangular regions and the GPS location information of the points of the final regions R1, R2, i.e. of the points in the obtained list 2202, may be used to obtain 2202 a geographical description of the GPS x and y intervals that delimit the regions in the two directions x and y of the rectangular shape of the regions.

Once the final regions R1, R2 are obtained 1106, said obtained regions and their corresponding mitigation factor $\alpha$ are stored 1107. The two final regions R1, R2 around the obstruction 1301 are represented by a triplet (R1, R2, $\alpha$), where R1 and R2 are the final regions and particularly their respective geographical description, and $\alpha$ is the mitigation factor between these two final regions R1, R2. For each identified obstacle i, i=1 to N, a triplet (R1$_i$, R2$_i$, $\alpha_i$) is obtained and stored in the base station comprising the regions. The triplets may be organized in a table. The table or tables can be shared with the neighboring base stations or with a central controller.

Two embodiments of possible table organizations are shown in Figs. 23 and 24. Fig. 23 shows an embodiment of the present invention for storing the final regions and their corresponding mitigation factor $\alpha$ according to the geographical description of the final regions R1, R2 obtained according to Fig. 21. The embodiment is in the form of a list of N triplets (R1$_i$, R2$_i$, $\alpha_i$) for i=1 to N. The final regions R1$_i$, R2$_i$ are defined as circles, so that the corresponding stored information corresponds to the location of the respective center of the circle and the radius of the circle. The location of the center is stored preferably as two-dimensional GPS location information X, Y. The mitigation factor $\alpha_i$ preferably corresponds to the minimum mitigation between any point of the first final region R1$_i$ and any point in the second final regions R2$_i$.

Fig. 24 shows a further embodiment of the present invention for storing the final regions and their corresponding mitigation factor $\alpha$, in which the final regions R1, R2 are approximated as rectangular regions. This embodiment makes use of the geographical description of the final regions R1, R2 as obtained in the embodiment of Fig. 22. Accordingly, each triplet (R1$_i$, R2$_i$, $\alpha_i$), with i=1 to N, comprises in this embodiment a geographical description of the GPS x and y intervals delimiting the first rectangular final region R1$_i$. and of the GPS x and y intervals delimiting the second rectangular final region R2$_i$.

The steps 1104 to 1107 are carried out for each obstruction that has been identified in step 1102. The steps of identifying 1102 the obstructions and obtaining 1106 and storing 1107 the corresponding regions R1, R2 and mitigation factor $\alpha$, and more generally the steps 1101 to 1108, are performed by a device that may be located in the base station or that may be different from the base station. For example, the device performing these steps may be located in a radio access network comprising the base station, or in a core network connected to the radio access network.

The further steps 1109 and 1110 are preferably carried out by the base station. In step 1109, the base station identifies nodes, i.e. users, that are in the defined and stored final regions R1, R2. If the storing step 1108 is carried out by a device that is outside of the base station, the base station is preferably adapted to communicate with said device for reading the information regarding the stored regions R1, R2 and mitigation factor $\alpha$. For example, the base station is adapted to read the content of the table shown in Fig. 23 or 24 and stored in said device. Preferably, the base station is adapted to communicate with said device so as to receive from said device a copy of said table and to pre-store locally in the base station the received copy of said table listing the triplets (R1$_i$, R2$_i$, $\alpha_i$).

According to an embodiment, nodes that are in the regions R1 and R2 may be identified 1109 by periodically retrieving GPS information of the nodes. By comparing the retrieved GPS information of a node M1 to the location information of the regions R1, R2, the base station may identify that the GPS information of node M1 match the location information of one of the regions R1, R2. For example in the embodiment of Fig. 3, if the base station BS identifies that the GPS information of the node M1 match the location information of the region R1, then the base station BS identifies 1109 that the node M1 is located in said region R1.

According to a further embodiment, the base station is adapted to send to each node of the cell the geographical information of the regions R1, R2 and to ask the node to send a notification whenever said node enters or exits such a region R1, R2. The geographical information of the regions may be, for example in the case of a round-shaped region, the GPS information of the region center and the region radius as shown in Figs. 21 and 23. As another example, the geographical information of the regions can be the x and y GPS intervals of a rectangular-shaped region as shown in Figs. 22 and 24.

The location information, e.g. GPS information, of the nodes and of the regions R1, R2 may be two-dimensional or three-dimensional. The use of three-dimensional information may be particularly advantageous for identifying a node within a building, wherein the regions R1, R2 are sub-part of the building.

Once the nodes, i.e. users, are identified 1109 as being in a final region R1, R2, the information about the final regions R1, R2 and the corresponding mitigation factor $\alpha$ is used for selecting nodes M1, M2 to be served in full-duplex mode, i.e. for assignment 1110 of uplink and downlink nodes M1, M2 for full-duplex uplink-downlink operation.

In an embodiment and as shown in Fig. 3, the uplink from the node M1 to the base station BS and the downlink from the base station BS to the node M2 may occur at the same time and in the same frequency band $f_A$ because the inter-user interference is mitigated from the geographical context. The obstruction mitigates the inter-user interference that is caused at the node M2 by the node M1.

In a further embodiment and as shown in Fig. 4, four nodes M1, M3, M5, M7 have data to be transmitted to the base station BS, and the base station BS has data to be transmitted to four nodes M2, M4, M6, M8. A half-duplex frequency division duplexing (FDD) approach would assign each communication link to a different frequency band as shown in Fig. 1. In contrast, a full-duplex capable base station BS utilizing the proposed method for inter-user mitigation may leverage the existence of final regions R1, R2 where the inter-user interference between regions can be mitigated. If a node is identified 1109 as being in one of said final regions, then the full-duplex base station BS can assign 1110 resources more efficiently by serving such a node in full-duplex mode.

More specifically, as shown in Fig. 4, the nodes M1, M3 are identified 1109 as being in the region R1A and the users M2, M4 as being in the region R2A. Since these regions R1A, R2A have been obtained 1106 according to the present invention, it is guaranteed that the inter-user interference mitigation between a node in region R1A and a node in region R2A is at least some value $\alpha$A depending on the mitigation factor $\alpha$ associated to and stored 1107 together with said regions R1A, R2A.

Using this knowledge, the base station BS can schedule simultaneous uplink and downlink if said mitigation value $\alpha$A is acceptable for the base station. Preferably, the criteria used by the base station in order to decide if an inter-user mitigation value $\alpha$A is acceptable or not depends on the specific requirements for the uplink and downlink links. If the mitigation value $\alpha$A is acceptable, then the base station may schedule the nodes M1, M3 in region R1A in uplink and the nodes M2, M4 in region R2A in downlink.

Advantageously, the required uplink communication from node M1 to base station BS and the required downlink communication from base station BS to node M2 may be carried out over the same frequency band $f_a$. With respect to the state of the art solution of Fig. 1, only half the frequency resources are used.

In summary, the full-duplex mode of the present invention uses less frequency resources than the half-duplex mode of the prior art in order to serve the same amount of uplink and downlink nodes. Consequently, with inter-user interference mitigation, full-duplex uplink-downlink is possible and this results in higher spectral efficiency. The problem of inter-user interference is mitigated using the proposed method. The regions R1, R2 identify areas where the inter-user interference is mitigated and full-duplex uplink and downlink nodes may be assigned 1110 based on the knowledge of these regions R1, R2, of the corresponding mitigation factor $\alpha$ and of the nodes that are located in these regions R1, R2. The higher spectral efficiency of the full-duplex mode results in non-used frequency bands that may be used e.g. to serve more users in the cell and/or schedule transmissions in adjacent cells.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. A base station for serving a cell and wirelessly communicating with nodes (M1, M2) of the cell,
   wherein the cell comprises a plurality of regions (R1, R2),
   wherein the base station is adapted to obtain a mitigation factor ($\alpha$) indicating a level of signal attenuation ($\mu$) between the regions (R1, R2), to select nodes (M1,M2) to be served in full-duplex mode depending on the mitigation factor ($\alpha$), and to serve the selected nodes (M1,M2) in full-duplex mode,
   **characterized in that** the full-duplex mode uses the same time and frequency resources for an uplink from a node (M1) and downlink from another node (M2),
   wherein each pair of regions (R1A, R2A) consisting of a first region (R1A) and a second region (R2A) of the plurality of regions (R1, R2) is associated with the mitigation factor ($\alpha$) indicating the level of signal attenuation ($\mu$) between the first region (R1A) and the second region (R2A), and
   the base station is adapted to select nodes (M1,M2) to be served in full-duplex mode by selecting one pair of regions (R1A, R2A) depending on the associated mitigation factor ($\alpha$) and selecting a first node (M1) from the first region (R1A) of the selected pair and a second node (M2) from the second region (R2A) of the selected pair.

2. The base station according to claim 1,
   wherein the base station is adapted to select one pair of regions (R1A, R2A) if the associated mitigation factor ($\alpha$) is above a first threshold.

3. The base station according to claim 2,
   wherein the first threshold depends on the traffic demand at the base station, and/or depends on interference requirements of nodes within the selected pair.

4. The base station according to claim 3,
   wherein the base station is adapted to decrease the first threshold if the traffic demand at the base station increases, or if the interference requirements decrease, and vice versa.

5. The base station according to any of preceding claims 1 to 4,
   wherein the base station is adapted to select a first node (M1) from the first region (R1A) of the selected pair depending on the interference requirements of the first node (M1), and/or to select a second node (M2) from the second region (R2A) of the selected pair depending on the interference requirements of the second node (M2).

6. The base station according to any of preceding claims 1 to 4,
wherein the base station is adapted to serve the selected nodes in full-duplex mode by receiving data from the first node (M1) and transmitting data to the second node (M2) simultaneously in the same frequency band.

7. The base station according to any of preceding claims 1 to 4,
wherein the base station is adapted to identify that a node (M1,M2) of the cell is or is not located in one of the plurality of regions (R1, R2).

8. The base station according to claim 7,
wherein the base station is adapted to identify that a node (M1,M2) is or is not located in one of the plurality of regions (R1, R2) in that:
the base station is adapted to retrieve location information of the node (M1,M2) and compare it to location information of the regions (R1, R2).

9. The base station according to claim 7,
wherein the base station is adapted to identify that a node (M1,M2) is or is not located in one of the plurality of regions (R1, R2) in that:
the base station is adapted to transmit location information of the regions (R1, R2) to the node (M1,M2) and to receive a notification from the node (M1,M2) indicating that the node (M1,M2) is inside or outside, or enters or leaves said one of the plurality of regions (R1, R2).

10. A method for a wireless communication between a base station (BS) and nodes (M1,M2) of a cell, wherein the cell comprises a plurality of regions (R1, R2),
the method comprising the steps of:

obtaining (501) by the base station a mitigation factor ($\alpha$) indicating a level of signal attenuation ($\mu$) between the regions (R1, R2),
selecting (502) by the base station nodes (M1,M2) to be served in full-duplex mode depending on the mitigation factor ($\alpha$), and
serving (503) by the base station the selected nodes (M1,M2) in full-duplex mode,
**characterized in that** each pair of regions (R1A, R2A) consisting of a first region (R1A) and a second region (R2A) of the plurality of regions (R1, R2) is associated with the mitigation factor ($\alpha$) indicating the level of signal attenuation ($\mu$) between the first region (R1A) and the second region (R2A), wherein
the method further comprises selecting nodes (M1,M2) to be served in full-duplex mode by selecting one pair of regions (R1A, R2A) depending on the associated mitigation factor ($\alpha$) and selecting a first node (M1) from the first region

(R1A) of the selected pair and a second node (M2) from the second region (R2A) of the selected pair, and
wherein the full-duplex mode uses the same time and frequency resources for an uplink from a node (M1) and downlink from another node (M2).

11. The method according to claim 10, the method further comprising the steps of:

defining a first region (R1A) and a second region (R2A) of the plurality of regions (R1, R2), by identifying at least one obstruction in a geographical area based on a map, said obstruction being an obstacle that attenuates a wireless signal,
wherein the first region (R1A) and the second region (R2A) are defined as being two areas around the obstruction,
computing a signal attenuation ($\mu$) from different points (p 1,1, ..., p1,20) of the first region (R1A) to different points (p2,1, ... p2,20) of the second region (R2A), and
computing the mitigation factor ($\alpha$) based on the signal attenuation ($\mu$).

12. The method according to claim 11,
wherein the step of defining a first region and a second region comprises,
if the signal attenuation ($\mu$) from a first point (p1,1) of the first region (R1A) to a second point (p2,1) of the second region (R2A) is below a second threshold ($\mu^*$), refining the first region (R1A) and the second region (R2A) by respectively removing therefrom the first point (p1,1) and the second point (p2,1).

13. The method according to any of preceding claims 11 and 12, further comprising:

computing different signal attenuations ($\mu$) from different points (p1,1, ...,p1,20) of the first region (R1A) to different points (p2,1, ... p2,20) of the second region (R2A), and
defining the mitigation factor ($\alpha$) as being a function of the signal attenuations ($\mu$),

14. The method according to claim 13, wherein the function of the signal attenuations ($\mu$) is the minimum value of the different signal attenuations ($\mu$) or the average value of the different signal attenuations ($\mu$).

15. A base station according to any of claims 1 to 9, further comprising a processor adapted to perform the method of any of claims 11 to 14.

16. A device adapted to implement the method of claims 11 to 14.

**17.** A wireless communication system comprising a base station according to any of claims 1 to 9 or 15, a device according to claim 16, and at least one node (M1,M2).

**Patentansprüche**

**1.** Basisstation zum Bedienen einer Funkzelle und drahtlosen Kommunizieren mit Knoten (M1,M2) der Funkzelle,
wobei die Funkzelle eine Vielzahl von Regionen (R1, R2) umfasst,
wobei die Basisstation dazu ausgelegt ist, einen Abschwächungsfaktor (a), der einen Pegel einer Signaldämpfung ($\mu$) zwischen den Regionen (R1, R2) angibt, zu erhalten, im Vollduplexmodus zu bedienende Knoten (M1, M2) abhängig vom Abschwächungsfaktor (a) auszuwählen und die ausgewählten Knoten (M1, M2) im Vollduplexmodus zu bedienen,
**dadurch gekennzeichnet, dass** der Vollduplexmodus dieselben Zeit- und Frequenzressourcen für eine Aufwärtsstrecke von einem Knoten (M1) und eine Abwärtsstrecke von einem anderen Knoten (M2) nutzt,
wobei jedes Paar Regionen (R1A, R2A), das aus einer ersten Region (R1A) und einer zweiten Region (R2A) der Vielzahl von Regionen (R1, R2) besteht, dem Abschwächungsfaktor (a), der den Pegel einer Signaldämpfung ($\mu$) zwischen der ersten Region (R1A) und der zweiten Region (R2A) angibt, zugeordnet ist und
die Basisstation dazu ausgelegt ist, im Vollduplexmodus zu bedienende Knoten (M1, M2) durch Auswählen eines Paars Regionen (R1A, R2A) abhängig vom zugeordneten Abschwächungsfaktor (a) und Auswählen eines ersten Knotens (M1) aus der ersten Region (R1A) des ausgewählten Paars und eines zweiten Knotens (M2) aus der zweiten Region (R2A) des ausgewählten Paars auszuwählen.

**2.** Basisstation nach Anspruch 1,
wobei die Basisstation dazu ausgelegt ist, ein Paar Regionen (R1A, R2A) auszuwählen, wenn der zugeordnete Abschwächungsfaktor (a) größer als ein erster Schwellenwert ist.

**3.** Basisstation nach Anspruch 2,
wobei der erste Schwellenwert vom Verkehrsbedarf an der Basisstation abhängt und/oder von Störungsanforderungen von Knoten innerhalb des ausgewählten Paars abhängt.

**4.** Basisstation nach Anspruch 3,
wobei die Basisstation dazu ausgelegt ist, den ersten Schwellenwert zu verringern, wenn sich der Verkehrsbedarf an der Basisstation erhöht oder wenn die Störungsanforderungen geringer werden oder umgekehrt.

**5.** Basisstation nach einem der vorhergehenden Ansprüche 1 bis 4,
wobei die Basisstation dazu ausgelegt ist, einen ersten Knoten (M1) aus der ersten Region (R1A) des ausgewählten Paars abhängig von den Störungsanforderungen des ersten Knotens (M1) auszuwählen und/oder einen zweiten Knoten (M2) aus der zweiten Region (R2A) des ausgewählten Paars abhängig von den Störungsanforderungen des zweiten Knotens (M2) auszuwählen.

**6.** Basisstation nach einem der vorhergehenden Ansprüche 1 bis 4,
wobei die Basisstation dazu ausgelegt ist, die ausgewählten Knoten im Vollduplexmodus zu bedienen, indem sie im selben Frequenzband gleichzeitig Daten vom ersten Knoten (M1) empfängt und Daten an den zweiten Knoten (M2) sendet.

**7.** Basisstation nach einem der vorhergehenden Ansprüche 1 bis 4,
wobei die Basisstation dazu ausgelegt ist zu identifizieren, dass sich ein Knoten (M1, M2) der Funkzelle in einer der Vielzahl von Regionen (R1, R2) befindet oder nicht.

**8.** Basisstation nach Anspruch 7,
wobei die Basisstation dazu ausgelegt ist zu identifizieren, dass sich ein Knoten (M1, M2) in einer der Vielzahl von Regionen (R1, R2) befindet oder nicht, insofern als: die Basisstation dazu ausgelegt ist, Standortinformationen des Knotens (M1, M2) abzurufen und mit Standortinformationen der Regionen (R1, R2) zu vergleichen.

**9.** Basisstation nach Anspruch 7,
wobei die Basisstation dazu ausgelegt ist zu identifizieren, dass sich ein Knoten (M1, M2) in einer der Vielzahl von Regionen (R1, R2) befindet oder nicht, insofern als: die Basisstation dazu ausgelegt ist, Standortinformationen der Regionen (R1, R2) an den Knoten (M1, M2) zu senden und eine Mitteilung vom Knoten (M1, M2), die angibt, dass der Knoten (M1, M2) innerhalb oder außerhalb der einen der Vielzahl von Regionen (R1, R2) ist oder in die eine Region eintritt oder sie verlässt, zu empfangen.

**10.** Verfahren für eine drahtlose Kommunikation zwischen einer Basisstation (BS) und Knoten (M1, M2) einer Funkzelle, wobei die Funkzelle eine Vielzahl von Regionen (R1, R2) umfasst, wobei das Verfahren folgende Schritte umfasst:

Erhalten (501) eines Abschwächungsfaktors (a), der einen Pegel einer Signaldämpfung ($\mu$)

zwischen den Regionen (R1, R2) angibt, durch die Basisstation, Auswählen (502) von im Vollduplexmodus zu bedienenden Knoten (M1, M2) abhängig vom Abschwächungsfaktor (a) durch die Basisstation und Bedienen (503) der ausgewählten Knoten (M1, M2) im Vollduplexmodus durch die Basis station,

**dadurch gekennzeichnet, dass** jedes Paar Regionen (R1A, R2A), das aus einer ersten Region (R1A) und einer zweiten Region (R2A) der Vielzahl von Regionen (R1, R2) besteht, dem Abschwächungsfaktor (a), der den Pegel einer Signaldämpfung (μ) zwischen der ersten Region (R1A) und der zweiten Region (R2A) angibt, zugeordnet ist, wobei

das Verfahren ferner Auswählen von im Vollduplexmodus zu bedienenden Knoten (M1, M2) durch Auswählen eines Paars Regionen (R1A, R2A) abhängig vom zugeordneten Abschwächungsfaktor (a) und Auswählen eines ersten Knotens (M1) aus der ersten Region (R1A) des ausgewählten Paars und eines zweiten Knotens (M2) aus der zweiten Region (R2A) des ausgewählten Paars umfasst und

wobei der Vollduplexmodus dieselben Zeit- und Frequenzressourcen für eine Aufwärtsstrecke von einem Knoten (M1) und eine Abwärtsstrecke von einem anderen Knoten (M2) nutzt.

11. Verfahren nach Anspruch 10, wobei das Verfahren ferner folgende Schritte umfasst:

Definieren einer ersten Region (R1A) und einer zweiten Region (R2A) der Vielzahl von Regionen (R1, R2) durch Identifizieren mindestens eines Hindernisses in einem geografischen Bereich basierend auf einer Karte, wobei es sich bei dem Hindernis um ein Hindernis, das ein drahtloses Signal dämpft, handelt, wobei die erste Region (R1A) und die zweite Region (R2A) als zwei Bereiche um das Hindernis herum definiert sind,

Berechnen einer Signaldämpfung (μ) von unterschiedlichen Punkten (p1,1, ..., p1,20) der ersten Region (R1A) zu unterschiedlichen Punkten (p2,1 ... p2,20) der zweiten Region (R2A) hin und

Berechnen des Abschwächungsfaktors (a) basierend auf der Signaldämpfung (μ).

12. Verfahren nach Anspruch 11,

wobei der Schritt des Definierens einer ersten Region und einer zweiten Region Folgendes umfasst:

wenn die Signaldämpfung (μ) von einem ersten Punkt (p1,1) der ersten Region (R1A) zu einem zweiten Punkt (p2,1) der zweiten Region (R2A) hin unter einem zweiten Schwellenwert (μ*) liegt, Verfeinern der ersten Region (R1A) und der zweiten Region (R2A) durch Entfernen des ersten Punkts (p1,1) bzw. des zweiten Punkts (p2,1) daraus.

13. Verfahren nach einem der vorhergehenden Ansprüche 11 und 12, das ferner Folgendes umfasst:

Berechnen unterschiedlicher Signaldämpfungen (μ) von unterschiedlichen Punkten (p1,1, ..., p1,20) der ersten Region (R1A) zu unterschiedlichen Punkten (p2,1, ... p2,20) der zweiten Region (R2A) hin und

Definieren des Abschwächungsfaktors (a) in Abhängigkeit von den Signaldämpfungen (μ).

14. Verfahren nach Anspruch 13, wobei die Abhängigkeit der Signaldämpfungen (μ) der Mindestwert der unterschiedlichen Signaldämpfungen (μ) oder der Durchschnittswert der unterschiedlichen Signaldämpfungen (μ) ist.

15. Basisstation nach einem der Ansprüche 1 bis 9, die ferner einen Prozessor, der dazu ausgelegt ist, das Verfahren nach einem der Ansprüche 11 bis 14 durchzuführen, umfasst.

16. Einrichtung, die dazu ausgelegt ist, das Verfahren nach den Ansprüchen 11 bis 14 zu implementieren.

17. Drahtloses Kommunikationssystem, das eine Basisstation nach einem der Ansprüche 1 bis 9 oder 15, eine Einrichtung nach Anspruch 16 und mindestens einen Knoten (M1, M2) umfasst.

## Revendications

1. Station de base pour desservir une cellule et communiquer sans fil avec des nœuds (M1,M2) de la cellule,

la cellule comprenant une pluralité de régions (R1, R2),

la station de base étant conçue pour obtenir un facteur de limitation (a) indiquant un niveau d'atténuation de signal (μ) entre les régions (R1, R2), pour sélectionner des nœuds (M1,M2) destinés à être desservis en mode duplex intégral en dépendance du facteur de limitation (a), et pour desservir les nœuds sélectionnés (M1,M2) en mode duplex intégral,

**caractérisée en ce que** le mode duplex intégral utilise les mêmes ressources en temps et en fréquence pour une liaison montante à partir d'un nœud (M1) et une liaison descendante à partir d'un autre nœud (M2),

dans laquelle chaque paire de régions (R1A, R2A) consistant en une première région (R1A) et une deuxième région (R2A) de la pluralité de régions (R1, R2) est associée au facteur de limitation (α) indiquant le niveau d'atténuation de signal ($\mu$) entre la première région (R1A) et la deuxième région (R2A), et

la station de base est conçue pour sélectionner des nœuds (M1,M2) pour qu'ils soient desservis en mode duplex intégral grâce à la sélection d'une paire de régions (R1A, R2A) en dépendance du facteur de limitation ($\alpha$) associé et la sélection d'un premier nœud (M1) à partir de la première région (R1A) de la paire sélectionnée et d'un deuxième nœud (M2) à partir de la deuxième région (R2A) de la paire sélectionnée.

2. Station de base selon la revendication 1, la station de base étant conçue pour sélectionner une paire de régions (R1A, R2A) si le facteur de limitation ($\alpha$) associé est supérieur à un premier seuil.

3. Station de base selon la revendication 2, dans laquelle le premier seuil dépend de la demande de trafic au niveau de la station de base, et/ou dépend des exigences d'interférence de nœuds au sein de la paire sélectionnée.

4. Station de base selon la revendication 3, la station de base étant conçue pour diminuer le premier seuil si la demande de trafic au niveau de la station de base augmente, ou si les exigences d'interférence diminuent, et vice versa.

5. Station de base selon n'importe lesquelles des revendications précédentes 1 à 4, la station de base étant conçue pour sélectionner un premier nœud (M1) à partir de la première région (R1A) de la paire sélectionnée en dépendance des exigences d'interférence du premier nœud (M1), et/ou pour sélectionner un deuxième nœud (M2) à partir de la deuxième région (R2A) de la paire sélectionnée en dépendance des exigences d'interférence du deuxième nœud (M2).

6. Station de base selon n'importe lesquelles des revendications précédentes 1 à 4, la station de base étant conçue pour desservir les nœuds sélectionnés en mode duplex intégral grâce à la réception de données à partir du premier nœud (M1) et la transmission de données vers le deuxième nœud (M2) simultanément dans la même bande de fréquences.

7. Station de base selon n'importe lesquelles des revendications précédentes 1 à 4, la station de base étant conçue pour identifier le fait qu'un nœud (M1, M2) de la cellule est ou n'est pas localisé dans une région de la pluralité de régions (R1, R2).

8. Station de base selon la revendication 7, la station de base étant conçue pour identifier le fait qu'un nœud (M1, M2) est ou n'est pas localisé dans une région de la pluralité de régions (R1, R2) en ce que :
la station de base est conçue pour récupérer des informations de localisation du nœud (M1, M2) et de les comparer à des informations de localisation des régions (R1, R2).

9. Station de base selon la revendication 7, la station de base étant conçue pour identifier le fait qu'un nœud (M1, M2) est ou n'est pas localisé dans une région de la pluralité de régions (R1, R2) en ce que :
la station de base est conçue pour transmettre des informations de localisation des régions (R1, R2) au nœud (M1, M2) et pour recevoir une notification en provenance du nœud (M1, M2) indiquant que le nœud (M1, M2) se situe à l'intérieur ou à l'extérieur, ou entre dans ou sort de ladite une région de la pluralité de régions (R1, R2).

10. Procédé pour une communication sans fil entre une station de base (BS) et des nœuds (M1, M2) d'une cellule, la cellule comprenant une pluralité de régions (R1, R2),
le procédé comprenant les étapes :

d'obtention (501) par la station de base d'un facteur de limitation ($\alpha$) indiquant un niveau d'atténuation de signal ($\mu$) entre les régions (R1, R2), de sélection (502) par la station de base de nœuds (M1, M2) destinés à être desservis en mode duplex intégral en dépendance du facteur d'atténuation (a), et
de desserte (503) par la station de base des nœuds sélectionnés (M1, M2) en mode duplex intégral,
**caractérisé en ce que** chaque paire de régions (R1A, R2A) consistant en une première région (R1A) et une deuxième région (R2A) de la pluralité de régions (R1, R2) est associée au facteur de limitation ($\alpha$) indiquant le niveau d'atténuation de signal ($\mu$) entre la première région (R1A) et la deuxième région (R2A),
le procédé comprenant en outre la sélection de nœuds (M1, M2) pour qu'ils soient desservis en mode duplex intégral grâce à la sélection d'une paire de régions (R1A, R2A) en dépendance du facteur de limitation ($\alpha$) associé et la sélection d'un premier nœud (M1) à partir de la première région (R1A) de la paire sélectionnée et d'un deuxième nœud (M2) à partir de la deuxième région (R2A) de la paire sélectionnée ; et
dans lequel le mode duplex intégral utilise les mêmes ressources en temps et en fréquence pour une liaison montante à partir d'un nœud (M1) et une liaison descendante à partir d'un autre nœud (M2).

**11.** Procédé selon la revendication 10, le procédé comprenant en outre les étapes :

de définition d'une première région (R1A) et d'une deuxième région (R2A) de la pluralité de régions (R1, R2) grâce à l'identification d'au moins une obstruction dans une aire géographique basée sur une carte, ladite obstruction étant un obstacle qui atténue un signal sans fil, dans lequel la première région (R1A) et la deuxième région (R2A) sont définies comme étant deux aires autour de l'obstruction, de calcul d'une atténuation de signal ($\mu$) à partir de différents points (p1,1, ..., p1,20) de la première région (R1A) jusqu'à différents points (p2,1, ..., p2,20) de la deuxième région (R2A), et de calcul du facteur de limitation ($\alpha$) sur la base de l'atténuation de signal ($\mu$).

**12.** Procédé selon la revendication 11, dans lequel l'étape de définition d'une première région et d'une deuxième région comprend, si l'atténuation de signal ($\mu$) à partir d'un premier point (p1,1) de la première région (R1A) jusqu'à un deuxième point (p2,1) de la deuxième région (R2A) est en dessous d'un deuxième seuil ($\mu$*), l'affinage de la première région (R1A) et de la deuxième région (R2A) grâce à l'élimination respective de celles-ci du premier point (p1,1) et du deuxième point (p2,1).

**13.** Procédé selon n'importe laquelle des revendications précédentes 11 et 12, comprenant en outre :

le calcul de différentes atténuations de signal ($\mu$) à partir de points différents (p1,1, ..., p1,20) de la première région (R1A) jusqu'à des points différents (p2,1, ... p2,20) de la deuxième région (R2A), et la définition du facteur de limitation ($\alpha$) comme étant fonction des atténuations de signal ($\mu$).

**14.** Procédé selon la revendication 13, dans lequel la fonction des atténuations de signal ($\mu$) est la valeur minimum des différentes atténuations de signal ($\mu$) ou la valeur moyenne des différentes atténuations de signal ($\mu$).

**15.** Station de base selon n'importe lesquelles des revendications 1 à 9, comprenant en outre un processeur conçu pour réaliser le procédé de n'importe lesquelles des revendications 11 à 14.

**16.** Dispositif conçu pour mettre en œuvre le procédé des revendications 11 à 14.

**17.** Système de communication sans fil comprenant une station de base selon n'importe lesquelles des revendications 1 à 9 ou 15, un dispositif selon la revendication 16, et au moins un nœud (M1, M2).

**Fig. 1 (state of the art)**

**Fig. 2 (state of the art)**

300

Inter-user interference is mitigated by using geographical context

**Fig. 3**

400

**Fig. 4**

the base station defines/obtains a mitigation factor indicating a level of signal attenuation between regions of a cell being served by a base station regions — 501

the base station selects nodes to be served in full-duplex mode depending on a mitigation factor indicating a level of signal attenuation between the regions — 502

the base station serves the selected nodes in full-duplex mode — 503

500

**Fig. 5**

defining a mitigation factor indicating a level of signal attenuation between regions of a cell being served by a base station regions — 601

600

**Fig. 6**

the node receives location information of the regions — 701

the node transmits a notification indicating the location of the node with respect to at least one of the regions — 702

700

**Fig. 7**

800

801

R1    M1    f$_A$    M2    R2

Fig. 8

900

901

R1 M1    f$_A$    f$_A$    f$_A$    R2 M2

Fig. 9

1000

R1    M1    f$_A$    1001    M2    R2

Fig. 10

1100

**1101** — Input: Street map and/or radio map and/or floor plan.

**1102** — Identify obstructions in the geography that can be used for inter-user interference mitigation.
(*example of obstructions: buildings or walls*)

**1103** — Choose one obstruction

**1104** — Define preliminary regions R1' and R2' around obstruction.
(*example: x meters from the obstruction boundary*)

**1105** — Compute the signal attenuation between different locations in the preliminary regions.
(*example: compute path loss between point a ∈ R1' and point b ∈ R2'*)

**1106** — Obtain the final regions R1 and R2 and the corresponding mitigation factor α. These regions satisfy that for any user M1 ∈ R1 and any user M2 ∈ R2, the inter-user interference mitigation is greater than α.

**1107** — Store obtained regions and their corresponding α.
(*example: (R1$_i$, R2$_i$, α$_i$) for obstruction i*)

No — Completed for all obstructions ? — Yes

**1108**

**1109** — Identify users that are in the defined regions.
(*example: send region GPS information to users and ask them to notify when they enter and exit a region*)

Use obtained regions, the corresponding α, and user location, for assignment of uplink and downlink users for full-duplex uplink-downlink operation.

**1110**

**Fig. 11**

1201

1202

**Fig. 12**

1301

Possible location of a building

**Fig. 13**

1301

R1'

R2'

**Fig. 14**

Fig. 15

Fig. 16

Fig. 17

Fig. 18

**Fig. 19**

**Fig. 20**

**Fig. 21**

**List of points in final regions R1, R2, and the signal attenuation μ between the points.**

| R1 | R2 | μ |
|---|---|---|
| p1,6 | p2,7 | μ(6,7) |
| .... | .... | .... |
| p1,14 | p2,10 | μ(14,10) |
| .... | .... | .... |
| p1,15 | p2,15 | μ(15,15) |
| .... | .... | .... |

2201

Use GPS for points in R1 and R2 to obtain a geographical description of the regions R1 and R2 respectively.
*Example of geographical description: GPS x and y intervals for R1 and GPS x and y intervals for R2.*

2202

2203    2204

**Fig. 22**

|  | R1 | R2 | α |
|---|---|---|---|
| i=1 | - GPS X,Y for R11 center<br>- R11 radius | - GPS X,Y for R21 center<br>- R12 radius | α1 |
| i=2 | .... | .... | .... |
| i=3 | .... | .... | .... |
| i=N | - GPS X,Y for R1N center<br>- R1N radius | - GPS X,Y for R2N center<br>- R1N radius | αN |

**Fig. 23**

|  | R1 | R2 | α |
|---|---|---|---|
| i=1 | - GPS X interval for R11<br>- GPS Y interval for R11 | - GPS X interval for R21<br>- GPS Y interval for R21 | α1 |
| i=2 | .... | .... | .... |
| i=3 | .... | .... | .... |
| i=N | - GPS X interval for R1N<br>- GPS Y interval for R1N | - GPS X interval for R2N<br>- GPS Y interval for R2N | αN |

**Fig. 24**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012112112 A1
- US 2010112998 A1
- WO 2012008957 A1
- US 2011003606 A1